# FASCICULE DE BREVET EUROPEEN

(11) **EP 3 572 318 B1**
(45) Date de publication et mention de la délivrance du brevet: **31.08.2022**
(21) Numéro de dépôt: 19174133.9
(22) Date de dépôt: 13.05.2019
(51) Int. Cl.: B64C 13/04

(54) **PALONNIER POUR AÉRONEF À MODULE PRINCIPAL MONOBLOC ET AMOVIBLE**
SEITENSTEUERPEDALEINHEIT FÜR LUFTFAHRZEUG MIT ENTFERNBAREM MONOBLOCK-HAUPTMODUL
MONOBLOC RUDDER UNIT FOR AN AIRCRAFT WITH DETACHABLE MAIN MODULE

(30) Priorité: 22.05.2018 FR 1854222
(43) Date de publication de la demande: 27.11.2019
(73) Titulaire: Airbus Operations SAS, 31060 Toulouse (FR)
(72) Inventeur: GUERING, Bernard, 31850 Montrabé (FR); DE KERGOMMEAUX, Matthieu, 31000 Toulouse (FR)
(74) Mandataire: Gevers & Orès

(56) Documents cités:
- WO-A1-2016/191071
- US-A1- 2014 131 523
- US-A1- 2017 166 296

## Description

### DOMAINE TECHNIQUE

La présente invention concerne un palonnier pour un aéronef, en particulier pour un avion de transport, ainsi qu'un aéronef comportant un tel palonnier.

Sur un aéronef, un palonnier est un dispositif mécanique qui permet au pilote et au copilote de commander la gouverne de direction et les freins des roues.

Le palonnier comprend des pédales et un ensemble de pièces mobiles qui, selon les types de mouvements qui sont appliqués aux pédales par le ou les pilotes, commandent la gouverne de direction ou les freins de l'aéronef.

### ÉTAT DE LA TECHNIQUE

Les palonniers utilisés sur les aéronefs sont, principalement sur les avions de ligne, des palonniers intégrés dans le plancher de la cabine de pilotage.

Pour son fonctionnement, le palonnier doit comprendre un grand nombre de pièces (articulations, bielles, pivots,...). Un tel palonnier usuel, en raison notamment de ce nombre élevé de pièces, est complexe.

On connaît, par le document US 2014/131523 A1, un palonnier monté sur le plancher d'un aéronef et comprenant un ensemble de pédales agencé de chaque côté du palonnier. Ce palonnier comprend également un système de freinage et un système de gouvernail intégré dans un boîtier central.

On connaît également, par le document WO 2016/19107 A1, un système de gouverne monté sur un châssis lui-même fixé au plancher d'un aéronef. Le système comprend notamment une came agencée dans un boîtier et une paire d'ensembles de pédales est mécaniquement couplé à la came de sorte qu'un mouvement linéaire engendre une rotation de la came.

Il n'est généralement pas envisageable, de par sa taille et son architecture, de démonter un palonnier (sauf cas extrême).

Avec un palonnier usuel non démontable facilement, il est nécessaire en cas d'intervention de dégager des volumes importants, simplement dédiés à la maintenabilité. De plus, un tel démontage qui est possible dans une pointe avant usuelle d'aéronef devient impossible dans une pointe avant de nouvelle génération, pour laquelle les volumes dédiés à ces fonctions sont volontairement compactés pour permettre de réaliser des gains en augmentant les volumes de charge utile.

Un palonnier usuel ne présente donc pas une grande souplesse au niveau de sa maintenabilité, en cas d'une panne d'un ou plusieurs de ses composants internes.

### EXPOSÉ DE L'INVENTION

La présente invention prévoit un palonnier qui permet de remédier à cet inconvénient. Elle concerne un palonnier pour un aéronef, ledit palonnier comprenant au moins des pédales et un ensemble de fonctionnalités.

Selon l'invention, ledit palonnier comprend un module principal pourvu au moins desdites pédales et dudit ensemble de fonctionnalités, ledit module principal étant monobloc et amovible.

Dans le cadre de la présente invention, on entend par « module monobloc » un module qui est d'un seul bloc ou unitaire (c'est-à-dire qui correspond à un seul objet).

Ainsi, grâce à l'intégration des éléments principaux dans un unique module principal qui est amovible, le palonnier présente une grande souplesse, au niveau de sa maintenabilité, notamment en cas de panne d'un ou plusieurs de ses composants internes. Ceci permet de remédier à l'inconvénient précité.

Ledit module principal comporte, pour l'intégration de l'ensemble de fonctionnalités, un module central comprenant un module de base inférieur et un module électronique supérieur, le module électronique étant monté de façon amovible sur le module de base, le module électronique étant en outre pourvu d'au moins une trappe d'accès.

De façon avantageuse, dans une position montée, le module électronique est solidaire du module de base via des éléments de centrage avant et des éléments de fixation arrière.

Le module de base est avantageusement également pourvu d'au moins une trappe d'accès.

Par ailleurs, dans un mode de réalisation préféré, le module principal comporte également deux modules à pédale, chacun desdits modules à pédale étant pourvu d'une pédale, lesdits modules à pédale étant montés de façon amovible de part et d'autre d'un module de base, chacun desdits modules à pédale étant montés sur une face latérale associée du module de base.

De façon avantageuse, le module de base est pourvu, sur chacune des faces latérales, de rails de guidage configurés pour coopérer avec des patins à recirculation de billes, fixés sur le module à pédale associé.

Avantageusement, le module de base est pourvu d'au moins une trappe d'accès sur au moins l'une des faces latérales dudit module de base.

Par ailleurs, de façon avantageuse, le palonnier comporte une unité de restitution d'effort et de compensation pour pédales, de type PFTU (pour « Pedale Feel and Trim Unit » en anglais), qui est intégrée dans le module central du module principal.

Avantageusement l'unité de restitution d'effort et de compensation pour pédales comporte au moins certains des éléments suivants : un solénoïde d'embrayage, un embrayage d'arbre, un moteur de compensation, des capteurs de position d'arbre de palonnier, des capteurs de position d'arbre de compensation, des ressorts de restitution d'effort.

En outre, avantageusement, le module central comprend au moins un composant qui est monté par l'intermédiaire d'un système de verrouillage/déverrouillage (rapide) dédié.

Dans un mode de réalisation particulier, ledit système de verrouillage/déverrouillage comporte :
- un logement destiné à recevoir le composant, ledit logement étant pourvu d'une unique ouverture d'accès et d'un puits de guidage agencé à une extrémité opposée à l'ouverture d'accès ; et
- un dispositif de fermeture monté de façon articulée et apte à fermer au moins partiellement ladite ouverture d'accès et apte à verrouiller un composant installé dans le logement.

Par ailleurs, dans un mode de réalisation particulier, le palonnier comporte, de plus, au moins un châssis de support courbe destiné à être intégré dans un plancher de l'aéronef, et ledit module principal est configuré pour pouvoir être déplacé et positionné sur le châssis de support courbe, à l'aide d'une unité de déplacement.

Avantageusement, l'unité de déplacement comporte un système de guidage pourvu de deux rails de guidage montés sur le châssis de support et coopérant avec des galets montés rotatifs sous le module principal.

La présente invention concerne également un aéronef, en particulier un avion de transport, qui est pourvu d'un palonnier tel que celui spécifié ci-dessus.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 montre une vue latérale d'un avion au sol qui comporte un palonnier selon un mode de réalisation de l'invention ;
- la figure 2 est une vue en perspective d'un palonnier monté sur un châssis de support en regardant de l'arrière ;
- la figure 3 est une vue en perspective d'un palonnier en regardant de l'avant ;
- la figure 4 est une vue en perspective, en regardant de l'arrière, d'un palonnier dont des modules à pédale sont séparés d'un module central ;
- la figure 5 est une vue en perspective du module central d'un palonnier en regardant de l'arrière ;
- la figure 6 est une figure similaire à la figure 3 avec des parois représentées en transparence, pour montrer des éléments et composants agencés à l'intérieur du module central du palonnier ;
- les figures 7A à 7D montrent différentes étapes successives lors de l'installation d'un composant du palonnier dans un système de verrouillage/déverrouillage ; et
- les figures 8 et 9 sont des vue schématiques, respectivement latérale et en perspective, du châssis de support.

### DESCRIPTION DÉTAILLÉE

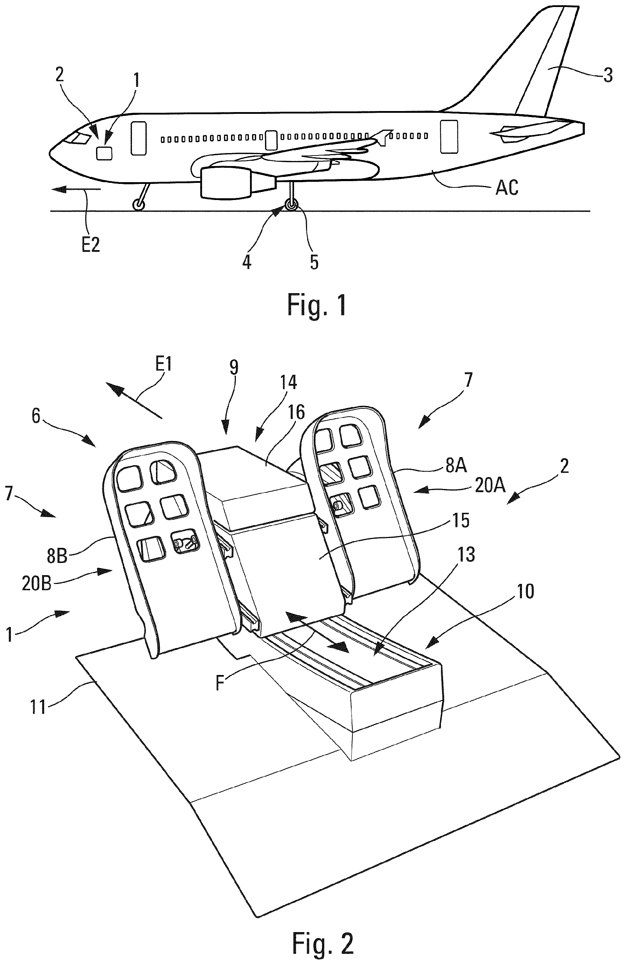

La figure 1 montre un aéronef AC, en l'occurrence un avion de transport, qui comprend une cabine de pilotage 2, dans laquelle est agencé un palonnier 1 selon l'invention (comme représenté très schématiquement sur cette figure 1). L'aéronef AC comporte également une gouverne de direction 3 et des freins 4 au niveau de roues 5 d'un train d'atterrissage principal de l'aéronef AC.

La figure 2 montre un palonnier 1 qui est destiné à être agencé dans la cabine de pilotage 2 de l'aéronef AC, en étant intégré dans le plancher 11 de la cabine de pilotage 2.

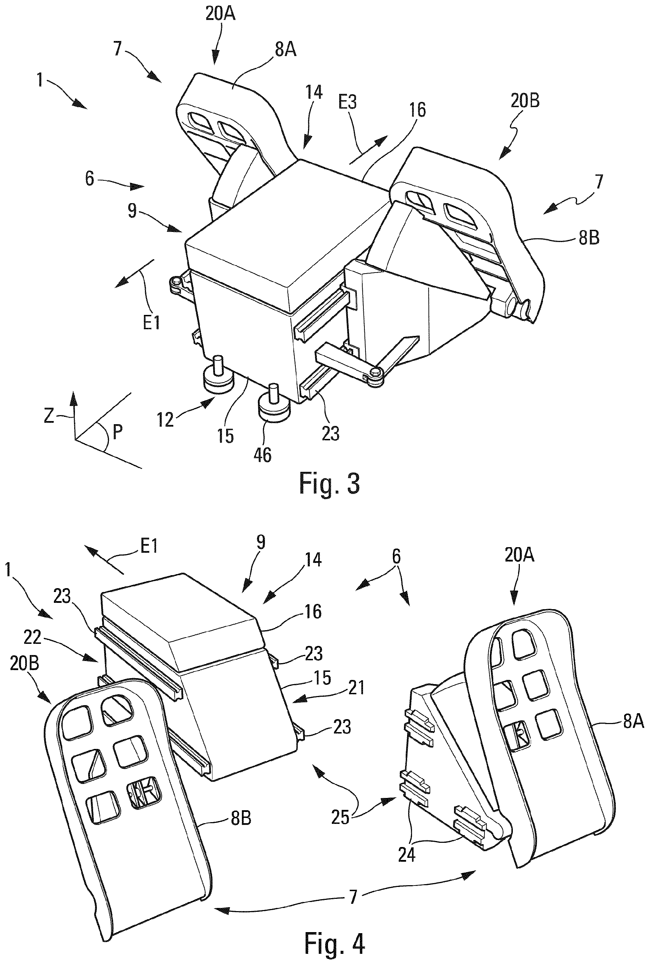

Dans le cadre de la présente invention, les sens "arrière" et "avant" sont définis par rapport à la direction longitudinale de l'aéronef AC, à savoir pour "avant" (comme illustré sur les figures 2, 3 et 4 par une flèche E1) vers l'avant de l'aéronef AC (dans le sens d'une flèche E2 sur la figure 1) dans le sens de vol (ou de déplacement) de l'aéronef AC, et pour "arrière" (comme illustré sur la figure 3 par une flèche E3) vers l'arrière de l'aéronef AC dans le sens inverse au sens de vol (ou de déplacement) de l'aéronef AC.

Par ailleurs, dans le cadre de la présente description, les termes "inférieur", "supérieur", "bas" et "haut" sont définis suivant une direction verticale Z qui est orthogonale à un plan P horizontal (défini par une direction dite longitudinale et une direction dite latérale) de l'aéronef, ledit plan P étant parallèle au plancher de la cabine de pilotage 2, comme illustré sur la figure 3.

Plus précisément :
- la direction longitudinale est définie selon l'axe longitudinal de l'aéronef ;
- la direction verticale Z forme avec la direction longitudinale un plan dit vertical qui est parallèle à un plan vertical de symétrie de l'aéronef ; et
- la direction latérale est orthogonale auxdites directions longitudinale et verticale, la direction latérale formant avec la direction longitudinale le plan P qui est parallèle au plancher 11 (figure 2) de la cabine de pilotage 2.

De façon usuelle, le palonnier 1 de l'aéronef AC est un organe de pilotage qui permet à un pilote de contrôler la gouverne de direction 3 (figure 1) de manière à agir sur l'axe de lacet de l'aéronef lors d'un vol, et également d'assurer le freinage de l'aéronef AC lorsque ce dernier est en mouvement au sol.

Le palonnier 1, qui est destiné à un avion de transport usuel, comporte un ensemble d'actionnement 6, représenté sur les figures 2 et 3, qui est susceptible d'être actionné par un pilote, par exemple le pilote principal ou un copilote de l'aéronef. Pour ce faire, le palonnier 1 comprend une paire 7 de pédales. Cette paire 7 comprend deux pédales 8A et 8B destinées à être actionnées par les deux pieds, respectivement droite et gauche, du pilote.

Pour un aéronef piloté par deux pilotes, le palonnier 1 comporte deux ensembles d'actionnement 6 tels que celui des figures 2 et 3 par exemple, qui sont configurés, de façon usuelle, de sorte que les pédales destinées à l'un des pilotes, le copilote par exemple, sont toujours dans la même position que celles destinées à l'autre pilote, le pilote principal par exemple.

Selon l'invention, ledit palonnier 1 comprend un module principal 9 pourvu au moins desdites pédales 8A et 8B et d'un ensemble de fonctionnalités précisées ci-dessous. De plus, selon l'invention, ledit module principal 9 est monobloc, c'est-à-dire qu'il est réalisé en un seul bloc et qu'il est unitaire (en correspondant à un seul objet).

Dans le cadre de la présente invention, on entend par « ensemble de fonctionnalités » toutes les fonctions inhérentes à un palonnier.

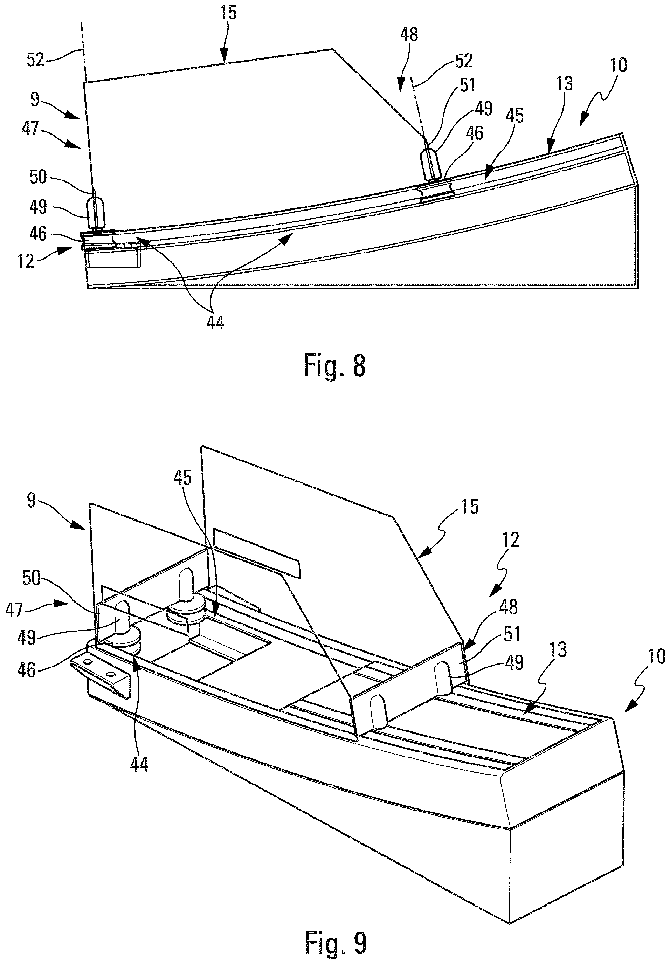

Le palonnier 1 comporte, de plus, comme représenté sur la figure 2, au moins un châssis de support (et de guidage) 10 courbe destiné à être intégré dans le plancher 11 de l'aéronef, et le module principal 9 est configuré pour pouvoir être déplacé et positionné sur le châssis de support 10 courbe, comme illustré par une double flèche F, à l'aide d'une unité de déplacement 12 (décrite ci-dessous en référence aux figures 8 et 9).

Le module principal 9 est ajusté en position, avant le vol, par l'utilisateur. Ce réglage peut être réalisé électriquement, comme précisé ci-après.

L'unité de déplacement 12 permet également de réaliser une liaison amovible du module principal 9 par rapport au châssis de support 10. Dans un mode de réalisation préféré, le châssis de support 10 est pourvu d'une face supérieure 13 incurvée (comme montré sur la figure 2), représentant une forme courbe concave, sur laquelle est déplacé le module principal 9.

Dans le cadre de la présente invention, le terme « amovible » signifie qu'une pièce peut être enlevée, retirée mais également remise à sa place.

Ledit module principal 9 comporte, pour l'intégration de l'ensemble des fonctionnalités, comme représenté sur les figures 2 à 5, un module central 14 comprenant un module de base 15 inférieur et un module électronique 16 supérieur.

Le module électronique 16 est monté de façon amovible sur le module de base 15.

Dans un mode de réalisation particulier, le module électronique 16 est solidaire du module de base 15 via des éléments de centrage avant et des éléments de fixation arrière (non représentés).

Ainsi, grâce à l'intégration des éléments principaux dans un unique module principal 9 qui est amovible, le palonnier 1 présente une grande souplesse, au niveau de sa maintenabilité, notamment en cas de panne d'un ou plusieurs de ses composants internes.

Pour extraire le module principal 9 du châssis de support 10, on peut mettre en oeuvre les opérations suivantes :
- positionnement du module principal 9 mobile dans une position extrême arrière ;
- extraction du module électronique 16 ;
- déconnexion de liens électriques avant ;
- déconnexion d'un lien hydraulique, en cas de présence de deux palonniers conjugués (direction, freinage) en agissant sur des raccords à déconnexion rapide et antifuite disposés en partie arrière ; et
- extraction du module principal 9 par l'arrière, vers le siège du pilote.

Cette extraction peut être réalisée, selon l'une des deux options suivantes :
- extraction à l'horizontale du module principal 9 mobile, jusqu'au dégagement de galets 46 avant (figure 3), un recul du siège (non représenté) du pilote étant nécessaire ;
- extraction à l'horizontale du module principal 9 mobile, jusqu'au dégagement de galets arrière, puis dégagement vers le haut des galets avant 46 (figure 3) par des trappes (non représentées) pratiquées dans des rails de guidage, et extraction de l'ensemble par le haut, le recul du siège du pilote n'étant pas nécessaire.

La masse réduite du module principal 9 permet à un seul opérateur, tel qu'un agent de maintenance, de réaliser l'extraction.

Pour réaliser cette extraction, l'opérateur peut être assis sur le siège du pilote, avec une visibilité et un accès directs aux différents éléments sur lesquels il a à intervenir.

L'ensemble du module principal 9 du palonnier 1, ou ses composants (ou sous-ensembles) principaux (le module central 14 mobile ou des modules à pédale précisés ci-dessous), peuvent être remplacés par de nouveaux modules mobiles.

L'architecture du palonnier 1 entraîne une simplicité d'intervention (extraction directe rapide et simplifiée), comme précisé ci-dessous, et permet également un remplacement complet du module principal 9, ce qui peut s'avérer nécessaire quand des opérations de maintenabilité nécessitant une qualification au-delà du niveau de qualification d'un opérateur non expert.

L'extraction relativement aisée du module principal 9 du palonnier 1 permet également d'envisager de démonter ce dernier, pour accéder à la zone dans laquelle il est installé. Plus généralement, et comme précisé ci-dessous, le palonnier 1 permet une intervention rapide, quel que soit le niveau d'intervention (local ou global).

Comme précisé ci-dessous, tous les éléments sujets à maintenabilité sont regroupés sur un même ensemble mobile et démontable, à savoir ledit module principal 9. De plus, dans le module principal 9, tous les éléments ou composants les plus critiques (criticité de niveau 1 précisée ci-après) vis-à-vis de la maintenabilité sont regroupés dans une même enceinte sécurisée très accessible, en assurant leur remplacement sur place de façon très aisée, comme précisé ci-dessous. Pour le reste des éléments (criticité de niveau 2 précisée ci-après), on prévoit une capacité de démontage complète du module principal 9, permettant de réaliser le démontage simplement et rapidement, en vue d'un échange standard de l'ensemble du module principal ou de ses sous-ensembles principaux, tels que les modules à pédale notamment.

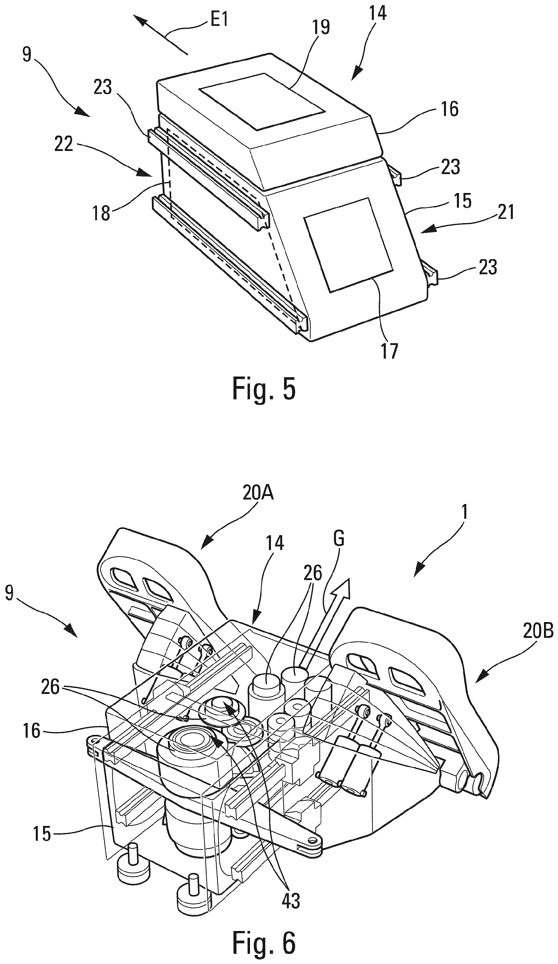

Notamment pour permettre l'extraction de composants, le module de base 15 est pourvu de trappes d'accès 17 et 18, comme représenté sur la figure 5.

En outre, le module électronique 16 est également pourvu d'au moins une trappe d'accès 19.

D'autres trappes d'accès, que les trappes 17 à 18 représentées à titre d'exemple sur la figure 5, peuvent être prévues sur le module central 14.

Par ailleurs, en cas de panne du module électronique 16, ce dernier peut également être remplacé par un nouveau module électronique. La fixation du module électronique 16 peut, par exemple, être réalisée en face arrière par deux vis ou verrous de type « racking » et en face avant par un connecteur autocentré et des pions de centrage et de maintien.

Le démontage du module électronique 16 peut être réalisé très rapidement. Ce démontage présente, de préférence, les étapes suivantes :
- positionnement du module principal 9 en position extrême arrière pour une meilleure proximité ;
- déconnexion des éléments suivants :
   - en face arrière, une interface électrique arrière avec le module central 14 mobile (fixation conventionnelle très accessible) ;
   - en face avant, un bloc connecteur de type « racking » et des pions de centrage permettant une connexion et un centrage mécanique en aveugle ;
- extraction du module électronique 16 vers l'arrière à l'aide d'une poignée dédiée (non représentée).

Par ailleurs, dans un mode de réalisation préféré, le module principal 9 comporte également deux modules à pédale 20A et 20B, comme représenté notamment sur les figures 3 et 4. Chacun de ces modules à pédale 20A et 20B est pourvu de l'une des pédales 8A et 8B.

De plus, chaque module à pédale 20A, 20B peut être lié, de façon amovible, au reste du palonnier 1 et notamment au module central 14. On obtient ainsi un module à pédale 20A, 20B unique par pédale 8A, 8B, qui peut être désolidarisé facilement du palonnier 1. Ceci permet notamment de simplifier et de faciliter la manipulation et le remplacement du ou des modules à pédale 20A, 20B.

Dans un mode de réalisation préféré, le module central 14 (et notamment son module de base 15) est muni, sur chacune de ses faces latérales 21 et 22, de deux rails de guidage 23 (pourvus, chacun, d'un chemin de roulement), comme représenté notamment sur les figures 3 et 4. Ces rails de guidage 23 sont agencés parallèlement l'un par rapport à l'autre sur chacune des faces latérales 21 et 22, l'un vers le bas et l'autre vers le haut du module central 14.

Ces rails de guidage 23 sont configurés pour coopérer avec des patins 24 à recirculation de billes. Ces patins 24 sont fixés sur le module à pédale 20A, 20B associé, et sont configurés pour pouvoir se déplacer dans les chemins de roulement des rails de guidage 23. Ces patins 24 font partie d'un système de liaison 25 du module à pédale 20A, 20B.

Le module de base 15 du module central 14 est pourvu de trappes d'accès 18 sur les faces latérales 21 et 22 de liaison aux modules à pédale 20A et 20B.

Le système de liaison 25 permet, en outre, une extraction facile et rapide du module de pédale 20A, 20B dudit module central 9 sur lequel il est monté de façon amovible.

Cette opération d'extraction peut être nécessaire, notamment pour remplacer un module à pédale 20A, 20B défectueux. Cette opération peut également être mise en oeuvre pour accéder à des composants internes du module central 14, tels qu'un composant 26 (figure 6), via par exemple les trappes d'accès prévues sur les faces latérales 21 et 22, comme la trappe 18 représentée sur la figure 5.

Le module central 14 comprend une pluralité de composants représentés de façon générale par une référence 26.

Dans un mode de réalisation préféré, le module central 14 comprend au moins et de préférence une pluralité de composants 26 qui sont montés, à chaque fois, par l'intermédiaire d'un système de verrouillage/déverrouillage (rapide) 28 dédié.

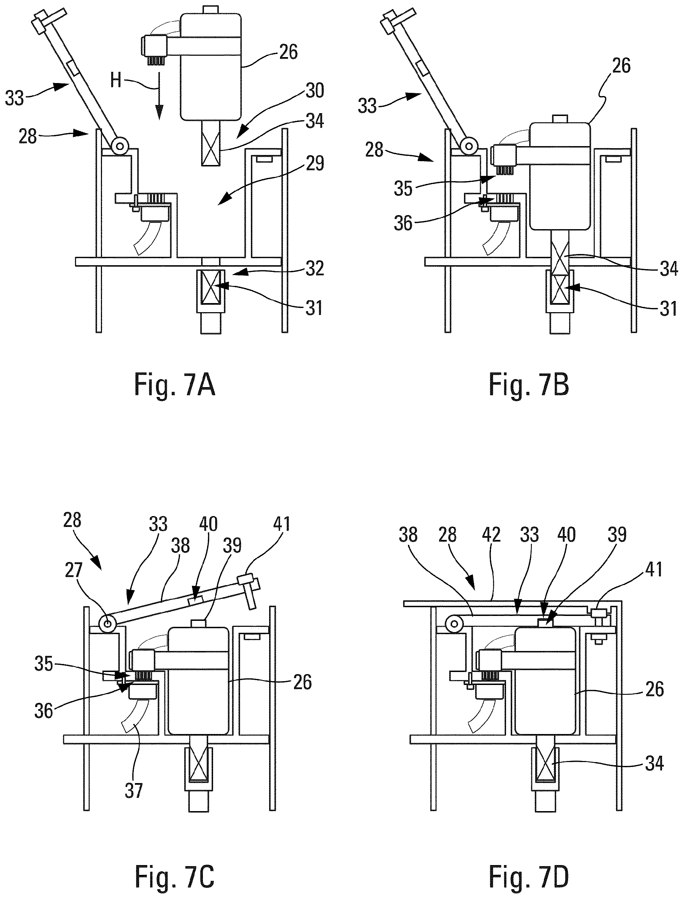

Dans un mode de réalisation particulier, représenté sur les figures 7A à 7D, le système de verrouillage/déverrouillage 28 comporte :
- un logement 29 destiné à recevoir le composant 26, ledit logement 29 étant pourvu d'une unique ouverture d'accès 30 et d'un puits de guidage 31 agencé à une extrémité 32 opposée à l'ouverture d'accès 30 ; et
- un dispositif de fermeture 33 monté de façon articulée et apte à fermer l'ouverture d'accès 30 et à verrouiller un composant 26 installé dans le logement.

L'insertion d'un composant 26 dans ce système de verrouillage/déverrouillage 28 comprend les étapes suivantes :
- approche du composant 26 du logement 29 et introduction progressive, comme illustré par une flèche H sur la figure 7A ;
- pré-guidage d'un pion d'extrémité 34 du composant 26 dans le puits de guidage 31 permettant de réaliser un guidage mécanique, comme représenté par la figure 7B ;
- insertion électrique avec une connexion électrique entre deux éléments de connexion 35 et 36 coopérant, qui sont liés, respectivement, au composant 26 et à une liaison électrique 37, comme représenté par la figure 7C, et basculement simultané d'une porte pivotante 38 du dispositif de fermeture 28, qui pivote autour d'une articulation 27 ;
- centrage mécanique par l'insertion d'un pion d'extrémité 39 du composant 26 dans un logement 40 coopérant prévu dans la porte pivotante 38, et verrouillage de la porte pivotante 38 par exemple à l'aide d'une vis 41, comme représenté sur la figure 7D.

La fixation du dispositif de fermeture 33 peut être sécurisée par l'agencement d'une plaque de fermeture 42 (comprenant par exemple un logement complémentaire destinée à recevoir la tête de la vis 41).

Une extraction d'un composant 26 peut être réalisée en sens inverse à l'insertion décrite ci-dessus, de la situation de la figure 7D à celle de la figure 7A.

Le système de verrouillage/déverrouillage 28, tel que décrit ci-dessus, permet ainsi une insertion et/ou une extraction d'un composant 26 de façon simple et rapide. Le système de verrouillage/déverrouillage 28 est caractérisé par :
- une fixation en partie haute, qui est très visible et très accessible ;
- une seule vis 41 de fixation (minimum d'outillage et de temps) ;
- un composant 26 pré-guidé dans le puits de guidage 31 à l'insertion ;
- un centrage mécanique sur l'interface mécanique fonctionnel assurant le blocage des degrés de liberté de rotation ;
- un centrage et une insertion électrique en aveugle ; et
- un verrouillage du seul degré de liberté restant, par appui, puis verrouillage, via la porte pivotante 38.

Pour réaliser, une extraction d'un composant 26 du module central 14, il suffit de réaliser :
- un démontage de la trappe ou des trappes 17, 18, 19 d'accès (fixées par exemple par des vis et des pions de centrage). Les trappes ont également une fonction structurale. Une fois en place, ces trappes restituent en effet à l'ensemble du module central 14 une rigidité en torsion ;
- une extraction directe et simple du composant 26 considéré du module central 14, comme illustré schématiquement par une flèche G sur la figure 6. Si les éléments de fixation sont facilement accessibles, on utilise une solution de fixation usuelle à vis (équipement posé sur embase serré par vis). Sinon, on utilise le système de verrouillage/déverrouillage 28 décrit ci-dessus.

Par ailleurs, dans un mode de réalisation préféré, le palonnier 1 comporte une unité de restitution d'effort et de compensation pour pédales, de type PFTU (pour « Pedal Feel and Trim Unit » en anglais), qui est intégrée dans le module central 14 du module principal 9, comme représenté par une référence 43 générale sur la figure 6.

A titre d'illustration, l'unité 43 de restitution d'effort et de compensation pour pédales comporte, notamment :
- un solénoïde d'embrayage d'arbre PA (« Trim ») ;
- un embrayage d'arbre PA (« Trim ») ;
- des moteurs de Trim d'arbre PA ;
- des capteurs de position de l'arbre de palonnier ;
- des capteurs de position de l'arbre de Trim ;
- un ressort de restitution d'effort normal ;
- un ressort de restitution d'effort PA (arbre de Trim) ;
- un levier d'entrée PFTU ; et
- un module électronique de gestion.

Par ailleurs, dans un mode de réalisation particulier, représenté sur les figures 8 et 9, l'unité de déplacement 12 permettant de déplacer le module principal 9 par le châssis de support 10 comporte, sur le châssis de support 10, un système de guidage 44. Ce système de guidage 44 comprend un ensemble (unique) à rails, formé des deux rails de guidage 45 latéraux, opposés et coopérant. Ces deux rails de guidage 45 sont agencés vers la face supérieure du châssis de support 10, sur des faces internes opposées de parois latérales (selon l'axe X) du châssis de support 10. Chacun desdits rails de guidage 45 présente une forme d'un arc de cercle de diamètre supérieur, de préférence, à deux mètres.

En outre, l'unité de déplacement 12 comporte des galets 46 qui sont montés rotatifs sous le module de base 15 du module principal 9. De préférence, l'unité de déplacement 12 comporte quatre galets 46 positionnés sensiblement aux quatre coins de la paroi inférieure du module de base 15 et configurés pour pouvoir se déplacer, par paire, dans les deux rails de guidage 45 latéraux opposés. Les galets de guidage 46 sont intégrés dans une face avant 47 et une face arrière 48 du module de base 15. Les galets 46 sont fixés dans des plots 49 renforcés, qui sont solidaires de zones 50 et 51 basses, mécaniquement renforcées, des faces 47 et 48. Par ailleurs, les galets 46 sont agencés de sorte que leurs axes de rotation 52 (figure 8) soient toujours orientés, quelle que soit leur position lors d'un déplacement le long des rails de guidage 45, suivant le rayon du cercle correspondant à la trajectoire décrite et plus précisément le cercle correspondant à la courbure des rails de guidage 45.

L'unité de déplacement 12 comporte également un système de réglage (non représenté) apte à être commandé, de préférence électriquement, par un opérateur notamment un pilote. Ce système de réglage est configuré pour permettre de régler la position du module principal 9 sur le châssis de support 10, via un déplacement à l'aide du système de guidage 44.

Pour le palonnier 1, tel que décrit ci-dessus, la maintenabilité de l'ensemble des composants et équipements sujets à maintenance (principalement un remplacement en cas de défectuosité) est fortement améliorée.

Pour cela, les éléments concernés sont classés en deux catégories, dits respectivement de niveau 1 et de niveau 2. Plus précisément :
- le niveau 1 regroupe les composants 26 et équipements dont la maintenabilité doit être réalisée le plus rapidement possible. Ce niveau 1 comprend les composants et équipements électriques (moteurs, capteurs, solénoïdes,...), qui sont les équipements les plus sensibles, sujets à panne franche et en relation directe avec les systèmes de l'aéronef, tels que les calculateurs de gestion du système ; et
- le niveau 2 regroupe, quant à lui, les autres équipements et composants, principalement les éléments ou équipements mécaniques (fonctionnels ou accessoires) et les éléments ou équipements hydrauliques, qui sont considérés comme moins critiques vis-à-vis de la maintenabilité (fiabilité supérieure, relation non directe avec les systèmes de l'aéronef).

Pour cela, on prévoit :
- un regroupement de l'ensemble des éléments sujets à maintenance (niveau 1 et niveau 2) dans un seul et même élément mobile, à savoir ledit module principal 9, et des moyens pour faciliter le démontage dudit module principal 9;
- un regroupement de l'ensemble des éléments de niveau 1 dans une même enceinte sécurisée et très accessible, à savoir ledit module central 14 du module principal 9, dans le but de mieux préserver ces éléments ainsi que de favoriser la capacité de démontage par unité, sur place.

Ainsi, deux scénarios sont possibles :
- selon un premier scénario, en cas de problème sur un composant électrique de niveau 1, on le remplace sur place avec une procédure simplifiée et rapide d'extraction de composant, comme illustré schématiquement par la flèche G sur la figure 6 ;
- selon un second scénario, en cas de problème sur un composant de niveau 2, on démonte le module principal 9 avec une procédure simplifiée et rapide d'extraction dudit module principal 9.

Tous les équipements sujets à maintenance rapide étant montés sur ou dans des modules mobiles, cela permet d'intervenir en cas d'incidents sur ces éléments de différentes manières et d'en faciliter ainsi la maintenabilité. Le châssis de support 10 fixe présente, quant à lui, des fonctions structurales, de support et de guidage des éléments mobiles.

## Revendications

1. Palonnier pour un aéronef, ledit palonnier (1) comprenant au moins des pédales (8A, 8B) et un ensemble de fonctionnalités, ledit palonnier comprenant un module principal (9) pourvu au moins desdites pédales (8A, 8B) et dudit ensemble de fonctionnalités, ledit module principal (9) étant monobloc et amovible,
**caractérisé en ce que** le module principal (9) comporte, pour l'intégration de l'ensemble de fonctionnalités, un module central (14) comprenant un module de base (15) et un module électronique (16), le module électronique (16) supérieur étant monté de façon amovible sur le module de base (15) inférieur, le module électronique (16) étant pourvu d'au moins une trappe d'accès (19).

2. Palonnier selon la revendication 1,
**caractérisé en ce que** dans une position montée, le module électronique (16) est solidaire du module de base (15) via des éléments de centrage avant et des éléments de fixation arrière.

3. Palonnier selon l'une des revendications 1 ou 2,
**caractérisé en ce que** le module de base (15) est pourvu d'au moins une trappe d'accès (17, 18).

4. Palonnier selon l'une quelconque des revendications précédentes, **caractérisé en ce que** le module principal (9) comporte également deux modules à pédale (20A, 20B), chacun desdits modules à pédale (20A, 20B) étant pourvu d'une pédale (8A, 8B), lesdits modules à pédale (20A, 20B) étant montés de façon amovible de part et d'autre du module de base (15), chacun desdits modules à pédale (20A, 20B) étant montés sur une face latérale (21, 22) associée du module de base (15).

5. Palonnier selon la revendication 4,
**caractérisé en ce que** le module de base (15) est pourvu, sur chacune des faces latérales (21, 22), de rails de guidage (23) configurés pour coopérer avec des patins (24) à recirculation de billes, fixés sur le module à pédale (20A, 20B) associé.

6. Palonnier selon l'une des revendications 4 ou 5,
**caractérisé en ce que** le module de base (15) est pourvu d'au moins une trappe (18) d'accès sur au moins l'une (22) des faces latérales (21, 22) dudit module de base (15).

7. Palonnier selon l'une quelconque des revendications précédentes, **caractérisé en ce qu'**il comporte une unité (43) de restitution d'effort et de compensation pour pédales, intégrée dans le module central (14) dudit module principal (9).

8. Palonnier selon la revendication 7,
**caractérisé en ce que** l'unité (43) de restitution d'effort et de compensation pour pédales comporte au moins certains des éléments suivants : un solénoïde d'embrayage, un embrayage d'arbre, un moteur de compensation, des capteurs de position d'arbre de palonnier, des capteurs de position d'arbre de compensation, des ressorts de restitution d'effort.

9. Palonnier selon l'une quelconque des revendications précédentes, **caractérisé en ce que** le module central (14) dudit module principal (9) comprend au moins un composant (26) monté par l'intermédiaire d'un système de verrouillage/déverrouillage (28) dédié.

10. Palonnier selon la revendication 9,
**caractérisé en ce que** le système de verrouillage/déverrouillage (28) comporte :
- un logement (29) destiné à recevoir le composant (26), ledit logement (29) étant pourvu d'une unique ouverture d'accès (30) et d'un puits de guidage (31) agencé à une extrémité (32) opposée à l'ouverture d'accès (30) ; et
- un dispositif de fermeture (33) monté de façon articulée et apte à fermer au moins partiellement ladite ouverture d'accès (30) et à verrouiller un composant (26) installé dans le logement (29).

11. Palonnier selon l'une quelconque des revendications précédentes, **caractérisé en ce qu'**il comporte, de plus, au moins un châssis de support (10) courbe destiné à être intégré dans un plancher (11) de l'aéronef (AC), et **en ce que** ledit module principal (9) est configuré pour pouvoir être déplacé et positionné sur le châssis de support (10) courbe, à l'aide d'une unité de déplacement (12).

12. Palonnier selon la revendication 11,
**caractérisé en ce que** l'unité de déplacement (12) comporte un système de guidage (44) pourvu de deux rails de guidage (45) montés sur le châssis de support (10) et coopérant avec des galets (46) montés rotatifs sous le module principal (9).

13. Aéronef,
**caractérisé en ce qu'**il comporte un palonnier (1) tel que celui spécifié sous l'une quelconque des revendications 1 à 12.

## Patentansprüche

1. Ruder für ein Luftfahrzeug, wobei das Ruder (1) mindestens Pedale (8A, 8B) und eine Einheit von Funktionalitäten umfasst, wobei das Ruder ein Hauptmodul (9) umfasst, das mit mindestens den Pedalen (8A, 8B) und der Einheit von Funktionalitäten versehen ist, wobei das Hauptmodul (9) einstückig und abnehmbar ist,
**dadurch gekennzeichnet, dass** das Hauptmodul (9) zur Integration der Einheit von Funktionalitäten ein Zentralmodul (14) umfasst, das ein Basismodul (15) und ein elektronisches Modul (16) umfasst, wobei das obere elektronische Modul (16) abnehmbar auf dem unteren Basismodul (15) montiert ist, wobei das elektronische Modul (16) mit mindestens einer Zugangsklappe (19) versehen ist.

2. Ruder nach Anspruch 1,
**dadurch gekennzeichnet, dass** das elektronische Modul (16) in einer montierten Position fest mit dem Basismodul (15) über vordere Zentrierungselemente und hintere Befestigungselemente verbunden ist.

3. Ruder nach einem der Ansprüche 1 oder 2,
**dadurch gekennzeichnet, dass** das Basismodul (15) mit mindestens einer Zugangsklappe (17, 18) versehen ist.

4. Ruder nach einem der vorstehenden Ansprüche,
**dadurch gekennzeichnet, dass** das Hauptmodul (9) auch zwei Pedalmodule (20A, 20B) umfasst, wobei jedes der Pedalmodule (20A, 20B) mit einem Pedal (8A, 8B) versehen ist, wobei die Pedalmodule (20A, 20B) abnehmbar zu beiden Seiten des Basismoduls (15) montiert sind, wobei jedes der Pedalmodule (20A, 20B) auf einer seitlichen Fläche (21, 22), die mit dem Basismodul (15) assoziiert ist, montiert ist.

5. Ruder nach Anspruch 4,
**dadurch gekennzeichnet, dass** das Basismodul (15) auf jeder der seitlichen Flächen (21, 22) mit Führungsschienen (23) versehen ist, die dazu konfiguriert sind, mit Kugelumlaufkufen (24), die an dem assoziierten Pedalmodul (20A, 20B) befestigt sind, zusammenzuwirken.

6. Ruder nach einem der Ansprüche 4 oder 5,
**dadurch gekennzeichnet, dass** das Basismodul (15) mit mindestens einer Zugangsklappe (18) auf mindestens einer (22) der seitlichen Flächen (21, 22) des Basismoduls versehen ist.

7. Ruder nach einem der vorstehenden Ansprüche,
**dadurch gekennzeichnet, dass** es eine Kraftrestitutions- und Kompensationseinheit (43) für Pedale, die in das Zentralmodul (14) des Hauptmoduls (9) integriert ist, umfasst.

8. Ruder nach Anspruch 7,
**dadurch gekennzeichnet, dass** die Kraftrestitutions- und Kompensationseinheit (43) für Pedale mindestens bestimmte der folgenden Elemente umfasst: eine Kupplungszylinderspule, eine Wellenkupplung, einen Kompensationsmotor,Ruderwellenpositionsfühler, Kompensationswellenpositionsfühler, Kraftrestitutionsfedern.

9. Ruder nach einem der vorstehenden Ansprüche,
**dadurch gekennzeichnet, dass** das Zentralmodul (14) des Hauptmoduls (9) mindestens ein Bauteil (26) umfasst, das über ein dediziertes Verriegelungs-/Entriegelungssystem (28) montiert ist.

10. Ruder nach Anspruch 9,
**dadurch gekennzeichnet, dass** das Verriegelungs-/Entriegelungssystem (28) Folgendes umfasst:
- eine Aufnahme (29), die dazu bestimmt ist, das Bauteil (26) aufzunehmen, wobei die Aufnahme (29) mit einer einzigen Zugangsöffnung (30) und einem Führungsschacht (31), der an einem Ende (32) eingerichtet ist, das der Zugangsöffnung (30) entgegengesetzt ist, versehen ist; und
- eine Schließvorrichtung (33), die gelenkig und zum mindestens teilweisen Schließen der Zugangsöffnung (30) und zum Verriegeln eines Bauteils (26), das in der Aufnahme (29) installiert ist, montiert ist.

11. Ruder nach einem der vorstehenden Ansprüche,
**dadurch gekennzeichnet, dass** es außerdem mindestens ein gekrümmtes Tragchassis (10) umfasst, das dazu bestimmt ist, in einem Boden (11) des Luftfahrzeugs (AC) integriert zu sein, und dass das Hauptmodul (9) dazu konfiguriert ist, auf dem gekrümmten Tragchassis (10) mit Hilfe einer Verlagerungseinheit (12) verlagerbar zu sein.

12. Ruder nach Anspruch 11,
**dadurch gekennzeichnet, dass** die Verlagerungseinheit (12) ein Führungssystem (44) umfasst, das mit zwei Führungsschienen (45) versehen ist, die auf dem Tragchassis (10) montiert sind und mit Walzen (46), die drehend unter dem Hauptmodul (9) montiert sind, zusammenwirken.

13. Luftfahrzeug,
**dadurch gekennzeichnet, dass** es ein Ruder (1) wie das in einem der Ansprüche 1 bis 12 spezifizierte umfasst.

## Claims

1. A rudder bar for an aircraft, said rudder bar (1) comprising at least pedals (8A, 8B) and a set of functionalities, said rudder bar comprising a main module (9) provided at least with said pedals (8A, 8B) and said set of functionalities, said main module (9) being one-piece and detachable, **characterized in that** the main module (9) comprises, for integrating the set of functionalities, a central module (14) comprising a base module (15) and an electronic module (16), the electronic module (16) superior being detachably mounted on the base module (15) inferior, the electronic module (16) being provided with at least one access hatch (19).

2. The rudder bar according to claim 1,
**characterized in that**, in a mounted position, the electronic module (16) is rigidly connected to the base module (15) via front centering elements and rear attachment elements.

3. The rudder bar according to any one of claims 1 or 2, **characterized in that** the base module (15) is provided with at least one access hatch (17, 18).

4. The rudder bar according to any one of the preceding claims, **characterized in that** the main module (9) also comprises two pedal modules (20A, 20B), each of said pedal modules (20A, 20B) being provided with a pedal (8A, 8B), said pedal modules (20A, 20B) being detachably mounted on both sides of the base module (15), each of said pedal modules (20A, 20B) being mounted on an associated lateral face (21, 22) of the base module (15).

5. The rudder bar according to claim 4,
**characterized in that** the base module (15) is provided, on each of the lateral faces (21, 22), with guide rails (23) configured to engage with recirculating ball bearing packs (24), fixed on the associated pedal module (20A, 20B).

6. The rudder bar according to any one of claims 4 or 5, **characterized in that** the base module (15) is provided with at least one access hatch (18) on at least one (22) of the lateral faces (21, 22) of said base module (15).

7. The rudder bar according to any one of the preceding claims, **characterized in that** it comprises a pedal feel and compensation unit (43), integrated into a central module (14) of said main module (9).

8. The rudder bar according to claim 7,
**characterized in that** the pedal feel and compensation unit (43) comprises at least some of the following elements: a clutch solenoid, a shaft clutch, a compensation motor, rudder bar shaft position sensors, compensation shaft position sensors, feel springs.

9. The rudder bar according to any one of the preceding claims, **characterized in that** the central module (14) of said main module (9) comprises at least one component (26) mounted by means of a dedicated locking/unlocking system (28).

10. The rudder bar according to claim 9,
**characterized in that** the locking/unlocking system (28) comprises:
- a housing (29) intended to receive the component (26), said housing (29) being provided with a single access opening (30) and a guide shaft (31) arranged at an end (32) opposite the access opening (30); and
- a closure device (33) mounted in an articulated manner and able to at least partially close said access opening (30) and to lock a component (26) installed in the housing (29).

11. The rudder bar according to any one of the preceding claims, **characterized in that** it further comprises at least one curved support frame (10) intended to be integrated into a floor (11) of the aircraft (AC), and **in that** said main module (9) is configured to be able to be moved and positioned on the curved support frame (10) using a movement unit (12).

12. The rudder bar according to claim 11,
**characterized in that** the movement unit (12) comprises a guide system (44) provided with two guide rails (45) mounted on the support frame (10) and engaging with rollers (46) rotationally mounted under the main module (9).

13. An aircraft,
**characterized in that** it comprises a rudder bar (1) as specified under any one of claims 1 to 12.
